# EUROPEAN PATENT APPLICATION

(11) **EP 1 820 551 A1**
(43) Date of publication of application: **22.08.2007**
(21) Application number: 06110139.0
(22) Date of filing: 20.02.2006
(51) Int. Cl.: B01D 29/01, B01D 29/03

(54) **A filter comprising a plastic material and method for producing it**

(71) Applicant: Agilent Technologies, Inc., Santa Clara, CA 95051 (US)
(72) Inventor: Beigel, Bertram, 76133 Karlsruhe (DE); Doerr, Thomas, 76337 Waldbronn (DE); Mueller, Jochen, 76199 Karlsruhe (DE)
(74) Representative: Barth, Daniel Mathias

(57) **Abstract**

A method of providing a filter element with a thermoplastic material. The filter element is adapted for at least one of a group comprising filtering, conducting and influencing a medium. The thermoplastic material at least partly surrounds the filter element. The thermoplastic material is adapted for at least one of a group comprising coupling, connecting, sealing, fixing, adjusting, aligning, receiving, protecting, and positioning the filter element. The plastic material is at least partly plastified for attaching the plastic material to the filter element.

## Description

### BACKGROUND ART

The present invention relates to a filter.

### DISCLOSURE

Filters are used for filtering, conducting, and/or influencing a medium, for example, light and/or a fluid, for example, a liquid. For this purposes, the filter can comprise a filter element. A plastic material adapted for coupling, connecting, sealing, fixing, adjusting, aligning, receiving, protecting, and/or positioning the filter element, can surround the filter element. The international application PCT/ EP05/053487- by the same applicant - shows a method of providing a conduit with a functional element.

It is an object of the invention to provide an improved filter. The object is solved by the independent claims. Further embodiments are shown by the dependent claims.

According to embodiments of the present invention, a method of modifying or creating a filter element comprising a thermoplastic material is suggested. The thermoplastic material can be at least partly plastified and modified. By this, the plastic material can be more or less formed and/or chemically modified and attached to the filter element. Advantageously, the plastic material can be sealed with a surface of the filter element. By this, the filter element can be coupled with the plastic material in a form-fitting manner and/or by a chemical bond of the filter element with the plastic material. Advantageously, the interface of the surface of the filter element and the thermoplastic material is absolutely tight. For example, such a filter, comprising said filter element can be used for confining a stationary phase of a liquid chromatography column. By attaching the thermoplastic material to the filter element by at least partly plastifying, it can be avoided that any particles of the stationary phase can pass the interface of the filter element and the thermoplastic material.

Embodiments may comprise one or more of the following. The plastic material can be heated beyond its softening temperature for making it soft. By this, the plastic material can penetrate the surface structure of the filter element and form the tight interface.

Advantageously, the plastic material can be plastified within a forming tool. By this, the plastic material can be confined, for example, for avoiding any undesired flow of the plastic material during the process of heating the plastic material. Additionally, pressure can be exerted on the plastic material, for example, caused by the thermal expansion of the plastic material. For this purpose, the forming tool can be closed and heated together with the plastic material confined by the forming tool. Additionally, closing the forming tool can exert the pressure. Advantageously, the plastic material can be formed and attached to the filter element by the forming tool and by heating the plastic material.

For accelerating the process, the plastic material and/or the forming tool can be actively cooled down, for example, within the forming tool. In further embodiments, the plastic material can be heated above the melting temperature for improving the form fitting contact and/or the chemical bond of the filter element with the thermoplastic material. The plastic material can be melted at least partly. By this, preformed parts comprising the plastic material can be coupled with the filter element.

Advantageously, just a contact zone of the filter element and the plastic material can be heated. For example, the plastic material can be molded within the forming tool and then melted at least partly at the contact zone. Possibly, the plastic material can be melted at least partly after removing the forming tool. For this purpose, for example, a hot fluid can be run through the filter element. Advantageously, the plastic material can be shrunk on the outer surface of the filter element by cooling it down to ambient temperature.

Embodiments may comprise one or more of the following. The plastic material can be heated by initiating a current flow, for example, in an electric conductor embedded in said plastic material. Advantageously, no additional contacts are needed. The embedded electric conductor can comprise a metal rim, wherein the initiated current flow is induced within the metal rim for heating the plastic material. Otherwise, for example, the filter element can comprise a conductive material, for example, at the contact zone. By this, additional parts embedded within the electric conductor are not necessary. In further embodiments, the thermoplastic material itself can be conductive.

The thermoplastic material can comprise polyetheretherketone (PEEK), one of a broad range of flouropolymeres, in particular perfluoroamines (PFA) or flourinated ethylen-propylene copolymer (FEP), liquid crystal polymers (LCP).

Further embodiments of the invention relate to a filter comprising a filter element. The filter element is adapted for filtering, conducting, and/or influencing the medium, for example light and/or a fluid. A thermoplastic material, wherein the thermoplastic material was plastified at least partly, can surround the filter element. Advantageously, by this, the plastic material is attached to said filter element, for example, in a form fitting manner and/or by a chemical bond.

Embodiments may comprise one or more of the following. A filter element can comprise a disk-shaped portion embedded in the centre of a washer-shaped portion of the plastic material. Advantageously, the washer-shaped portion of the plastic material can be mounted in a sealing contact to a fluid conduit, for example, a chromatographic column, wherein the filter element is adapted for confining the stationary phase of the chromatographic column. The filter element can be passed by the mobile phase, wherein the washer-shaped portion of the plastic material seals the chromatographic column in a fluid-tight manner.

Embodiments may comprise one or more of the following. The filter element can comprise the stationary phase of the liquid chromatographic column. For this purpose, the filter can comprise a tube, wherein the tube surrounds the thermoplastic material. The thermoplastic material is in contact with the stationary phase of the filter element. The thermoplastic material was heated for realizing a form-fitting bond with the stationary phase. The stationary phase can comprise beads, wherein the beads nearby the plastic material are held in a form fitting manner by the plastic material.

Advantageously, the performance of the chromatographic column can be improved, wherein any side effects occurring at the contact zone of the inner wall of the tube and the stationary phase are reduced due to the form fitting contact of the beads near the plastic material. Any differences in the permeability of the stationary phases over its cross section caused by an even surface of the tube confining the stationary phase can be avoided.

Embodiments may comprise one or more of the following. The filter element can be adapted for influencing the pressure of the medium, of the fluid. For this purpose, the filter element can realize a pressure-limiting valve or a limit value filter for the pressure of the medium. Whether the pressure within the filter element exceeds a maximum permissible value, the valve of the filter element opens automatically. For this purpose, the filter element can comprise a plug and/or a thin-walled capillary. The thin-walled capillary is destroyed when the limit pressure is reached and consequently the pressure drops and advantageously pressure sensitive system components e.g. expensive cells or sensors can be saved.

Advantageously, the filter element can be adapted for conditional sealing, wherein a seal opens when the pressure of the medium exceeds a maximum permissible value. This can happen reversibly or irreversibly. Advantageously, such a filter element can be realized by the thermoplastic material, wherein the plastic material is adapted for said conditional sealing.

Embodiments may comprise one or more of the following. The filter element can be adapted for conditional sealing a through hole, for example a bore, of a first layer, for example the wall of a tube comprising said bore. Therefore, the filter element can comprise a second layer adapted for sealing the through hole. The first layer is in contact with the medium and confines the medium. Due to the elasticity of the plastic material, the second layer lifts up from the first layer when the pressure of the medium confined by the first layer exceeds a maximum permissible value. Consequently, the filter element opens automatically when the maximum permissible value is exceeded and closes when the pressure stays below the maximum permissible value. By this, the filter element realizes a limit value filter for the pressure of the medium. Possibly, the first layer also can comprise the plastic material.

Besides this, the filter element can be adapted for transmitting and/or absorbing the medium, for example, light. The filter element can comprise, for example, lenses, windows, and/or light filters, for example, a red filter, a blue filter, etc..

The filter element can comprise an aperture adapted for filtering elements, for example particles or molecules, comprising a certain shape. For example, round-shaped elements can pass the filter element and triangle-shaped not. Advantageously, the plastic material can realize such a filter element.

Further embodiments of the invention can relate to a fluidic system comprising the filter element.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference sign(s).

Fig. 1 shows a longitudinal view of a filter comprising a washer-shaped portion comprising a thermoplastic material and a disk-shaped portion comprising a filter element,

Fig. 2 shows a longitudinal view of a filter element comprising a porous thermoplastic material,

Fig. 2a shows a longitudinal view of a filter element embedded in a shoulder of a tube,

Fig. 3 shows a longitudinal view of the filter of Fig. 1, wherein the washer-shaped portion comprises a shoulder,

Fig. 4 shows a longitudinal view of a further embodiment of the filter, comprising an additional distance ring adapted for fixing the disk-shaped portion of the filter element,

Fig. 5 shows a longitudinal view of another embodiment of the filter, wherein the washer-shaped portion can be formed and confined by a forming tool,

Fig. 6 shows a longitudinal view of a further embodiment of the filter, wherein the filter element comprises a lens and a window,

Fig. 7 shows a longitudinal view of another embodiment of the filter, wherein the filter element comprises a stationary phase of a liquid chromatographic column surrounded and confined by the thermoplastic material,

Fig. 7a shows a schematic cross sectional view of another embodiment of the filter, wherein the filter element comprises a monolithic stationary phase of a liquid chromatographic column embedded in a U-shaped half pipe and covered by a cover comprising a thermoplastic material,

Fig. 8 shows a longitudinal view of a filter comprising a filter element comprising a thin-walled capillary adapted for realizing a non reversible pressure-limiting valve,

Fig. 8a shows a longitudinal view of a filter comprising a filter element comprising a thin-walled capillary adapted for realizing a non reversible pressure-limiting valve, wherein the capillary is coupled to couplings adapted to the diameter of a inner tube of the capillary,

Fig. 9 shows a longitudinal view of a filter, wherein the filter element comprises a plug adapted for realizing a pressure limiting valve, and

Fig. 9a shows a longitudinal view of a filter, wherein the filter element comprises layers adapted for realizing a pressure limiting valve, and

Fig. 10 shows a schematic view of a fluidic system comprising two filters according to the filter shown in Fig. 1.

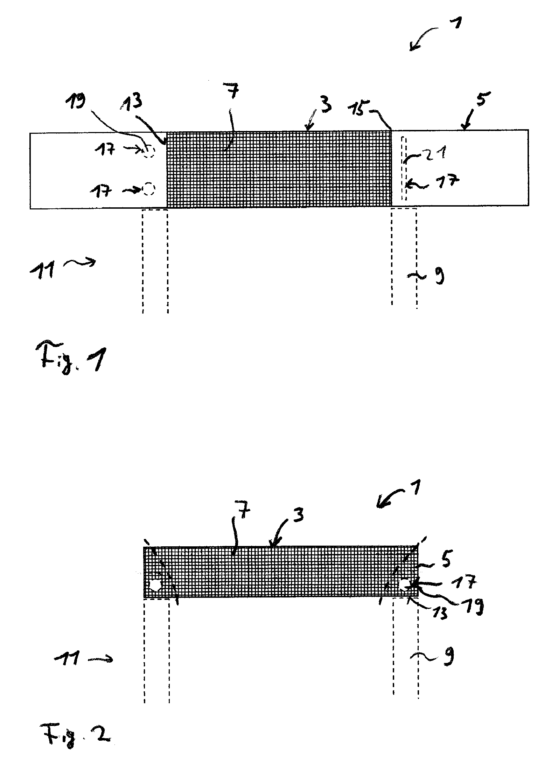

Fig. 1 shows a filter 1 comprising a disk-shaped portion 3 and a washer-shaped portion 5. The disk-shaped portion 3 of the filter 1 comprises a filter element 7 adapted for influencing a medium, for example, a fluid passing the filter element. The filter element 7 can be adapted for filtering a flowing fluid, for example, a liquid, for example, a liquid comprising a sample to be analyzed. The filter element 7 can comprise a frit, for example, comprising metal, a plating, a porous or cellular structure, glass or ceramic materials. The filter 1 can be coupled to a tube 9 as indicated by dashed lines. The tube 9 can be part of a liquid chromatographic column 11 comprising a not shown stationary phase. The stationary phase can comprise, for example, beads, wherein the filter 1 can confine the beads of the not shown stationary phase. For this purpose, the material of the filter element or rather the structure or rather the porosity of the filter element 7 is smaller than the dimension of the beads of the stationary phase of the column 11.

For attaching the washer-shaped portion 5 to the disk-shaped portion 3 of the filter 1, the washer-shaped portion 5 can comprise a thermoplastic material, wherein the thermoplastic material can be plastified. By this, a form fitting contact of an outer surface 13 of the filter element 7 with an inner surface 15 of the washer-shaped portion 5 can be realized. For this purpose, for example, the thermoplastic material of the washer-shaped portion 5 can be heated, for example, above its softening point. In other embodiments, the washer-shaped portion 5 of the filter 1 can be at least partly melted.

For heating the thermoplastic material, the washer-shaped portion 5 of the filter 1 can comprise an electric conductor 17 as indicated in Fig. 1 with dashed lines. The electric conductor 17 can comprise, for example, at least one metal rim 19 as illustrated exemplarily on the left-hand side of Fig. 1. In other embodiments, the electric conductor 17 can comprise a sheathing 21 as illustrated exemplarily on the right-hand side of Fig. 1. The metal rims 19 or the sheathing 21 can be embedded in the thermoplastic material of the washer-shaped portion 5 of the filter 1, for example, nearby the inner surface 15 of the washer-shaped portion 5. Possibly, the conductor 17 can be forced in the surface of the plastic material. Advantageously, an electric current flow can be induced within the electric conductor. Besides this, additionally or instead of, an electric current flow can be induced within the filter element 7. For this purpose, the disk-shaped portion 3 can comprise an electric conductor, for example a metal plaiting.

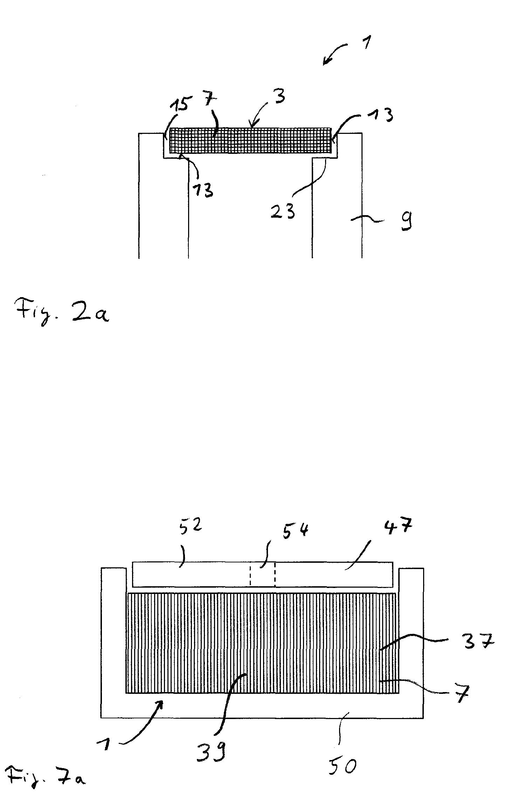

Fig. 2 shows a filter 1 comprising a disk-shaped portion 3 comprising a thermoplastic material. The thermoplastic material of the disk-shaped portion 3 of the filter 1 comprises a cellular or porous structure adapted for filtering a fluid. By this, the disk-shaped portion 3 of the filter 1 realizes a filter element 7 and a washer-shaped portion 5 of the filter 1.

The washer-shaped portion 5 of the filter 1 is adapted for coupling the filter 1 with the tube 9. For this purpose, the washer-shaped portion 5 comprises the electric conductor 17 comprising the metal rim 19. The washer-shaped portion 5 of the filter 1 is attached to the disk-shaped portion 3 of the filter 1, wherein the portions 3 and 5 of the filter 1 are realized as an integral part and by this attached to each other. Due to the porous structure of the disk-shaped portion 3, the filter element 7 can be realized. The washer-shaped portion 5 comprises a non-porous structure. For producing the washer-shaped portion 5, for providing the disk-shaped portion 3 with the washer-shaped portion 5, and for obtaining a homogenous or at least a closed-cell structure of the washer-shaped portion 5, the plastic material can be heated, for example, for melting it circularly by inducing an electric current flow within the electric conductor 17 or by laser radiation by a not shown laser. Thereafter, the disk-shaped portion 3 of the filter 1 is surrounded by - provided with - a fluid tight ring out of the same plastic material realizing the washer-shaped portion 5. Dashed lines exemplarily indicate a zone of the plastic material realizing the fluid tight ring, wherein the fluid tight ring surrounds the electric conductor 17 and comprises plastic material that was melted by initiating an electric current flow within the electric conductor 17.

The same electric current flow of the electric conductor 17 can be used for fixing the filter element 7 with the tube 9.

The tube 9 can also comprise a plastic material, for example, the same plastic material as the filter element 7 as shown in Fig. 2. Possibly, the tube 9 and the filter element 7 and the tube 9 can be designed as an integral part, wherein the disk shaped portion 3 comprises a porous structure and the rest a homogenous fluid tight structure. At least partly heating and/or forming the according parts of the plastic material can provide the fluid tight structure.

Fig. 2a shows a filter 1 comprising a filter element 7 with a disk-shaped portion 3 embedded in a shoulder 23 of a tube 9. Advantageously, an additional washer shaped portion is not necessary. The filter element 3 can comprise a plastic material, for example a porous plastic material. The disk-shaped portion 3 of the filter element 7 is fixed with the shoulder 23 of the tube 9, for example by at least partly heating the plastic material of the filter element 3, for example by a not shown electric conductor or by heating the tube 9. The tube 9 can comprise a conductive material and can be heated by inducing an electric current flow. Possibly, the filter element can comprise a metal and the tube can comprise a plastic material. Furthermore, a gap between the shoulder 23 of the tube 9 and the filter element 3 can be filled with a plastic material adapted to be heat sealed with the filter element 3 and the tube for attaching the filter element 3 to the tube 9.

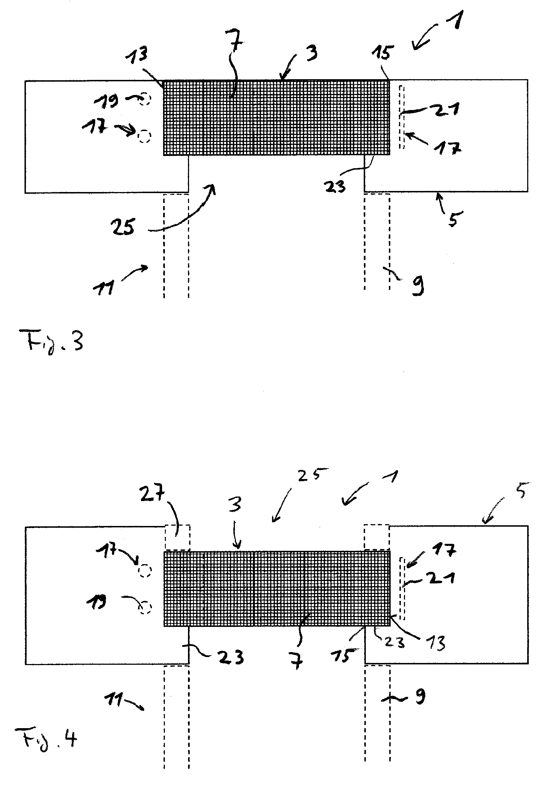

Fig. 3 shows the filter 1 of Fig. 1, wherein the disk-shaped portion 3 of the filter 1 is put against a shoulder 23 of the washer-shaped portion 5 of the filter 1. The shoulder 23 realizes a limit stop for the disk-shaped portion 3. Advantageously, the disk-shaped portion 3 can be inserted in a multiple-step bore 25 of the washer-shaped portion 5, wherein the disk-shaped portion 3 or rather the filter element 7 can be aligned and held in place by the shoulder 23 of the multiple-step bore 25 until the thermoplastic material of the washer-shaped portion 5 of the filter 1 is plastified and/or melted.

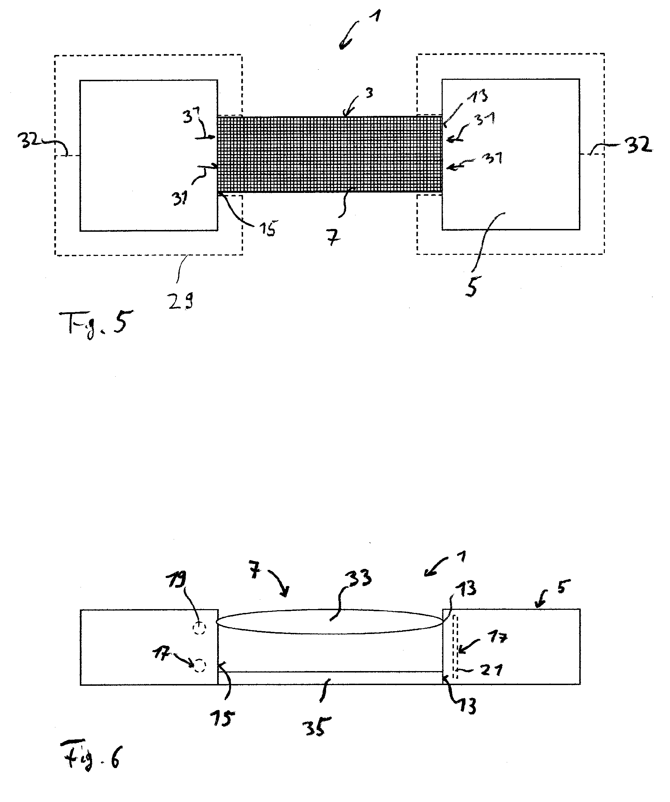

Fig. 4 shows another embodiment of a filter 1 comprising a multiple-step bore 25. The filter 1 as illustrated in Fig. 4 comprises an additional distance ring 27, illustrated with dashed lines. The distance ring 27 can be mounted into the multiple-step bore 25 of the filter 1 for realizing a press fit with the multiple-step bore 25 of the washer-shaped portion 5 of the filter 1. By this, the disk-shaped portion 3 of the filter element 7 can be held exactly in place before the filter element 7 is attached to the washer-shaped portion 5 of the filter 1. Advantageously, by this, the filter 1 can be mounted more precisely.

Fig. 5 shows another embodiment of a filter 1, wherein the washer-shaped portion 5 can be formed and confined by a forming tool 29. Advantageously, the forming tool confines the disk-shaped portion 3 while plastifying and/or heating the plastic material of the washer-shaped portion 5 of the filter 1. Possibly, the plastic material of the washer-shaped portion 5 of the filter 1 can be heated within the forming tool 29. Advantageously, by this the thermal expansion can apply pressure to the plastic material. As illustrated in Fig. 5 by arrows 31, the plastic material of the disk-shaped portion 3 can be pressed towards the outer surface 13 of the disk-shaped portion 3 of the filter 1. Advantageously, the plastic material can penetrate the surface structure of the disk-shaped portion 3 for attaching the plastic material to the disk-shaped portion 3. This can provide a tight interface of the portions 3 and 5. Advantageously, the filter 1 can confine stationary phases of chromatographic columns with a smaller grain size.

For demolding, the forming tool 29 can be designed as a two-piece tool as indicated with dashed lines 32. Possibly, the forming tool 29 can be designed as an integral part and coupled to the washer shaped portion 5 of the filter 1. By this, the forming tool 29 and the washer-shaped portion 5 can be pre-mounted. Thereafter, the plastic material can be heated for coupling the disk-shaped portion 3 with the washer-shaped portion 5. The forming tool 29 can remain and can serve as a reinforcement of the filter 1.

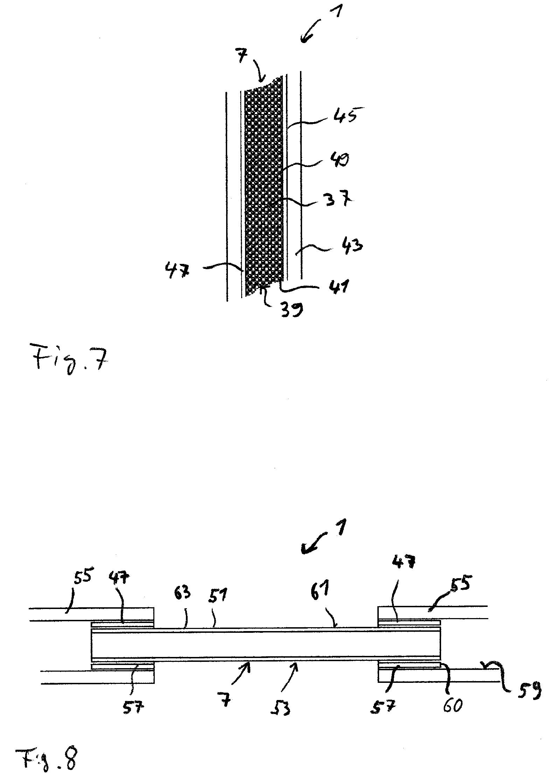

Fig. 6 shows a filter 1 with a filter element 7.

The filter element 7 comprises a lens 33 and a window 35. The lens 33 and the window 35 of the filter element 7 of the filter 1 are adapted for influencing light passing the filter element 7, for example, for focusing a light beam. The lens 33 and the window 35 can be transparent for light but can retain another medium like a fluid, for example a liquid. The lens 33 and the window 35 are attached to the inner surface 15 of the disk-shaped portion 3 of the filter 1 in the same manner as described in the Figs. 1-5. The filter 1 as shown in Fig. 6 realizes an optical filter. The lens 33 can be realized as a convex lens 33 as shown in Fig. 6. In further embodiments, the lens 33 can be realized as any other lens, for example as a concave lens. The window 35 can realize any filter function adapted for filtering a specified spectrum of light. In embodiments, the window 35 can be realized as a 100 % transparent window. Possibly, any combination and any amount of lenses and windows can be combined to a filter analog to the filter as illustrated in Fig. 6.

Fig. 7 shows a filter 1 with a filter element 7, wherein the filter element 7 realizes a liquid chromatographic column 37.

The column 37 of the filter element 7 of the filter 1 can comprise a stationary phase 39, for example, comprising beads 41. A tube 43, wherein an inner wall 45 of the tube 43 comprises a thermoplastic material 47, confines the beads 41. The thermoplastic material 47 of the tube 43 was at least partly plastified. By this, the beads 41 of the stationary phase 39 can be embedded at a contact zone 49 into the thermoplastic material 47. Advantageously, by this, any side effects occurring at the inner wall 45 of the column 37 can be reduced to a minimum. The liquid flowing through the column 37, for example, comprising a sample to be analyzed, can be analyzed more exactly. Advantageously, by embedding the beads 41 into the thermoplastic material 47 of the inner wall 45, a constant microporous structure along the complete cross section of the column 37 can be realized. Advantageously, for confining the beads 41 within the tube 43, at least one of the ends of the tube 43 can be closed by at least one filter 1 according to any one of the above Figs.. By this, a plurality of filters, for example, three filters can be connected in series and combined to a new filter.

Fig. 7a shows a schematic cross sectional view of a filter 1, wherein the filter element 7 of the filter 1 comprises a grown monolithic stationary phase 39 of a liquid chromatographic column 37 embedded in a U-shaped half pipe 50 and covered by a cover 52 comprising a plastic material.

The cover 52 also is embedded in the U-shaped half pipe 50 and covers the monolithic stationary phase 39 in a fluid tight manner. For realizing the fluid tightness, the cover 52 can be heated, for example by inducing an electric current flow within a not illustrated electric conductor and/or within the U-shaped half pipe 50. For this propose, the U-shaped half pipe 50 can comprise a conductive material, for example a conductive coating and/or can comprise metal. For coupling the filter 1 with a fluid sink and/or a fluid source, the cover 52 or the half pipe 50 can comprise at least one bore 54 for realizing an inlet and/or an outlet for a mobile phase to be transported through the stationary phase 39 of the filter 1. For this purpose, the U-shaped half pipe 50 can be boat-formed, wherein the cover 52 covers the complete stationary phase 39 in a fluid tight manner, whereas the bore 54 or the bores 54 remain as unique openings.

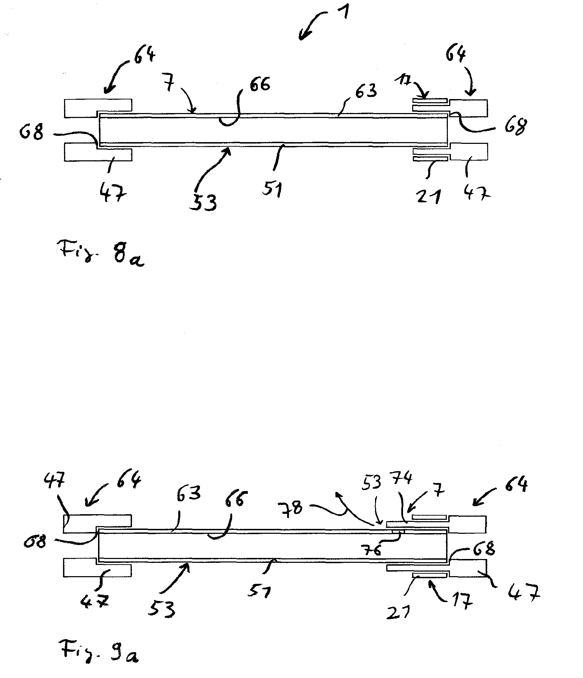

Fig. 8 shows a filter 1 with a filter element 7, wherein the filter element 7 comprises a thin-walled capillary 51.
The capillary 51 of the filter element 7 is adapted for realizing a pressure-limiting valve 53. The medium, for example a liquid, can pass the filter element 7 or rather the capillary 51. For this purpose, the capillary 51 is coupled to two tubes 55 adapted for conducting the medium, for example the fluid.

The tubes 55 are coupled to the capillary 51 by a thermoplastic material 47. For this purpose, the filter element 7 or better the capillary 51 of the filter 1 is provided with the thermoplastic material 47, wherein the thermoplastic material 47 can be at least partly plastified, for example, by heating. The thermoplastic material 47 of the filter 1 as shown in Fig. 8 can be realized, for example as a sheathing 57. For attaching the thermoplastic material 47 of the sheathing 57 to the filter element 7 or rather to the capillary 51, the sheathing 57 can be inserted into a circular gap 60 remaining between an inner wall 59 of the tube 55 and an outer wall 61 of the capillary 51.

For attaching the sheathing 55 to the walls 59 and 61, the plastic material 47 can be heated. For influencing the liquid, or better for influencing the pressure of the liquid conducted within the tubes 55 and the capillary 51, the capillary 51 comprises a very thin wall 63, wherein the wall 63 of the capillary 51 is destroyed by the pressure of the fluid conducted within the capillary 51 when the pressure exceeds a limit pressure. By this, the pressure-limiting valve 53 can be realized.

Fig. 8a shows a filter 1 comprising a filter element 7 comprising a thin-walled capillary 51 adapted for realizing a non reversible pressure-limiting valve 53, wherein the capillary 51 is coupled to couplings 64 adapted to the diameter of an inner tube 66 of the capillary 51. The couplings 64 can comprise a plastic material 47. The plastic material 47 can be heated for coupling the couplings 64 with the capillary 51.

As illustrated exemplarily on the left-hand side of Fig. 8a, the coupling 64 can be coupled to the capillary by a not shown removable tool. As illustrated exemplarily on the right-hand side of Fig.8a, the coupling 64 can comprise an electric conductor 17, for example realized by a sheathing 21 at least partly surrounding the plastic material 47, wherein the plastic material 47 at least partly surrounds the capillary 51. For attaching the plastic material 47 of the coupling 64, an electric current flow can be initiated within the electric conductor 17. Advantageously, the couplings 64 comprise a shoulder 68. By this, for example for optimizing the flow resistance of the filter 1 and for avoiding undesired side effects caused by any discontinuous and/or varying cross sections, the inner diameter of the couplings 47 can be equal to the diameter of the inner tube 66 of the capillary 51.

Fig. 9 shows a filter 1 with a filter element 7.

The filter element 7 comprises a ball 65 adapted for limiting the pressure conducted within the filter 1. For this purpose, the filter 1 as shown in Fig. 9 comprises a T-piece coupled to two tubes 55 adapted for conducting a medium, for example a fluid or a liquid. One branch 69 of the T-piece 67 is coupled to a sheathing 71 comprising a thermoplastic material 47. For providing the filter element 7 with the plastic material 47 or better for attaching the thermoplastic material 47 of the sheathing 71 to the ball 65 and to an outer surface 61 of the T-piece 67, the plastic material 47 can be plastified. The ball 65 is inserted into an inner tube 73 of the sheathing 71, wherein a span of the inner tube 73 of the sheathing 71 is put onto the outer surface 61 of the T-piece 67. By this, a pressure limit valve of the filter element 7 of the filter 1 can be realized. For this purpose, the ball 65 of the filter element 7 is pressed out of the inner tube 73 of the sheathing 71 when the pressure of the fluid conducted within the T-piece 67 extends a limit pressure.

Fig 9a shows a filter 1 according to the filter 1 of Fig. 8a, but comprising a filter element 7 comprising a capillary 51 adapted for realizing a reversible pressure-limiting valve 53, wherein the capillary 51 is coupled to couplings 64 adapted to the diameter of an inner tube 66 of the capillary 51.

In difference to the filter 1 of Fig. 8a, a filter element 7 of the filter 1 of Fig 9a comprises a layer 74 adapted for realizing a pressure limiting valve 53. The layer 74 of the pressure limiting valve 53 at least partly covers the outer wall 63 of the capillary 51. As a further difference, the outer wall 63 of the capillary 51 can resist high pressures and comprises a bore 76 covered by the layer 74 in a fluid tight manner. Due to the elasticity of the plastic material 47, the seal of the bore 76 realized by the layer 74 opens when the pressure of the medium conducted or confined within the capillary 51 exceeds a maximum permissible value. Consequently, the bore 76 or better the layer 74 of the filter element 7 of the filter 1 opens automatically when the maximum permissible value is exceeded and closes when the pressure stays below the maximum permissible value. The layer 74 of the filter element 7 of the filter 1 provides a reversible conditional sealing, wherein the medium can leak out when the maximum permissible value is exceeded, as indicated by an arrow 78. Advantageously, such a layer 74 can be used for installing the filter element 7 at an additional branch of a conduit, for example a branch of a T-piece similar to the T-piece 67 of Fig. 9. The layer 74 can provide a sheathing at least partly surrounding the capillary 51. The filter element 7 of the filter 1 of Fig 9a is provided by a combination of a span of the capillary 51 comprising the bore 76, wherein the bore 76 is covered by the sheathing of the layer 74 or rather wherein said span of the capillary 51 comprising the bore 76 is surrounded by the plastic material of the layer 74.

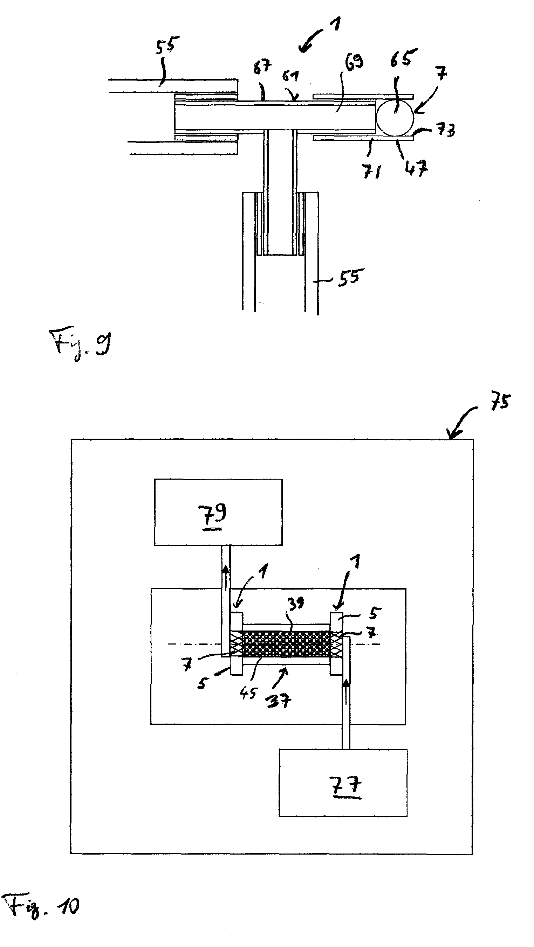

Fig. 10 shows a fluidic system 75 comprising a fluid source 77 and a fluid sink 79.

The fluid source 77 is coupled to a filter 1, for example, according to Fig. 1 adapted for confining a stationary phase 39 of a liquid chromatographic column 11 of the fluidic system 75. The column 37 of the fluidic system 75 is coupled downstream to a second filter 1. The second filter 1 is also adapted for confining the stationary phase 39 of the column 37. The second filter 1 of the fluidic system 75 is coupled downstream to the fluid sink 79. The fluid sink 79 can comprise a not shown device for analyzing a fluid, for example, a liquid comprising a sample. For this purpose, the fluid sink 79 can comprise, for example, a mass spectrograph.

The filter can be adapted for analyzing liquid. More specifically, the filter can be adapted for executing at least one microfluidic process, for example an electrophoresis and/or a liquid chromatographic process, for example a high performance liquid chromatographic process (HPLC). Therefore, the filter can be coupled to a liquid delivery system, in particular to a pump, and/or to a power source. For analyzing liquid or rather one or more components within the liquid, the fluidic system can comprise a detection area, such as an optical detection area and/or an electrical detection area being arranged close to a flow path within the fluidic system. Otherwise, the fluidic system can be coupled to a laboratory apparatus, for example to a mass spectrometer, for analyzing the liquid. For executing an electrophoresis, the flow path can comprise a gel. Besides this, the filter can be a component part of a laboratory arrangement.

It is to be understood, that embodiments described are not limited to the particular component parts of the devices described or to process features of the methods described as such devices and methods may vary. It is also to be understood, that different features as described in different embodiments, for example illustrated with different Fig., may be combined to new embodiments. For example, a plurality of different filter elements, for example, a lens and a frit can be combined with each other. It is finally to be understood, that the terminology used herein is for the purposes of describing particular embodiments only and it is not intended to be limiting. It must be noted, that as used in the specification and the appended claims, the singular forms of "a", "an", and "the" include plural referents until the context clearly dictates otherwise. Thus, for example, the reference to "a filter" may include two or more such functional elements.

## Claims

1. A method of modifying or creating a filter element (7) comprising a thermoplastic material (47), wherein the filter element (7) is adapted for at least one of a group comprising filtering, conducting and influencing a medium, the thermoplastic material (47) at least partly surrounds said filter element (7), and said thermoplastic material (47) is adapted for at least one of a group comprising coupling, connecting, sealing, fixing, adjusting, aligning, receiving, protecting, and positioning said filter element (7), the method comprising:
- at least partly plastifying said thermoplastic material (47) for modifying said thermoplastic material (47).

2. The method of claim 1 comprising at least one of:
- at least partly plastifying and molding said thermoplastic material (47) for modifying said filter element (7),
- at least partly plastifying and molding said thermoplastic material (47) for creating said filter element (7).
- at least partly plastifying and molding said thermoplastic material (47) for providing said filter element (7) with said thermoplastic material,
- at least partly plastifying said thermoplastic material (47) for attaching said thermoplastic material (47) to said filter element (7),
- at least partly melting said thermoplastic material (47) for partly closing a cellular structure of said thermoplastic material (47),
- heating said thermoplastic material (47) beyond the softening temperature for bringing said thermoplastic material (47) in its softening range and making it soft,
- surrounding an outer surface or span of said filter element (7) at least partly with said thermoplastic material (47).

3. The method of claim 1 or any one of the above claims, comprising at least one of:
- plastifying said thermoplastic material (47) within a forming tool (29),
- exerting pressure on said thermoplastic material (47) caused by the thermal expansion of said thermoplastic material (47) by heating the closed forming tool comprising the thermoplastic material (47),
- exerting pressure on the thermoplastic material (47) by closing said forming tool (29),
- plastifying said thermoplastic material (47) by said forming tool (29), wherein said forming tool (29) is part of the filter (1) and remains after forming and serves as an reinforcement of the filter (1).

4. The method of claim 3 or any one of the above claims, comprising at least one of:
- actively cooling down said thermoplastic material (47) and\or said forming tool,
- cooling said thermoplastic material (47) within said forming tool,
- heating said thermoplastic material (47) within said forming tool above the melting temperature for melting said thermoplastic material (47),
- heating said thermoplastic material (47) at least partly above the melting temperature for melting said thermoplastic material (47) at least partly.

5. The method of claim 3 or any one of the above claims, comprising at least one of:
- melting said thermoplastic material (47) at least partly at a contact zone of said filter element (7) and said thermoplastic material (47),
- melting said thermoplastic material (47) at least partly after molding it,
- melting said thermoplastic material (47) at least partly after molding it and before opening said tool,
- melting said thermoplastic material (47) at least partly after removing it from said tool,

6. The method of claim 5 or any one of the above claims, comprising at least one of:
- running a hot fluid through said filter element (7) for melting said thermoplastic material (47) at said contact zone,
- melting said thermoplastic material (47) at said contact zone by laser radiation,
- melting said thermoplastic material (47) at said contact zone by initiating an electric current flow,
- melting said thermoplastic material (47) at said contact zone by inducing an electric current flow.

7. The method of claim 3 or any one of the above claims, comprising at least one of:
- equipping said filter element (7) with said thermoplastic material (47),
- equipping said filter element (7) with said thermoplastic material (47) before loading said forming tool.

8. The method of claim 2 or any one of the above claims, comprising at least one of:
- shrinking said thermoplastic material (47) by cooling said thermoplastic material (47) down to ambient temperature,
- shrinking said thermoplastic material (47) on said outer surface of the said filter element (7).

9. The method of claim 1 or any one of the above claims, comprising at least one of:
- initiating a current flow for heating said thermoplastic material (47),
- initiating said current flow in an electric conductor (17) embedded in said thermoplastic material (47),
- initiating said current flow in said filter element (7), wherein said filter element (7) comprises a conductive material,
- initiating said current flow in said electric conductor (17), wherein said electric conductor comprises a metal rim (19),
- initiating said current flow in said electric conductor (17), wherein said electric conductor comprises a sheathing (21),
- initiating said current flow by inducing said current flow.

10. The method of claim 1 or any one of the above claims, wherein said thermoplastic material (47) is at least one of: a thermoplastic material (47), polyetheretherketone (PEEK), one of a broad range of flouropolymeres, in particular perfluoroamines (PFA) or flourinated ethylen-propylene copolymer (FEP), liquid crystal polymers (LCP).

11. The method of claim 1 or any one of the above claims, comprising at least one of:
- said medium is at least on of a group comprising light, a fluid, a gas, and a liquid,
- said filter element (7) is adapted for confining a stationary phase of a liquid chromatography column (11),
- said filter element (7) is adapted for influencing the pressure of said medium,
- said filter element (7) comprises a liquid chromatography column (37),
- said filter element (7) is adapted for providing a pressure-limiting valve,
- said filter element (7) comprises a layer (74) adapted for conditional sealing a through hole,
- said filter element (7) comprises said thermoplastic material (47), wherein said thermoplastic material (47) is at least partly porous,
- said filter element (7) comprises glass or ceramic materials.

12. A filter, comprising:
- a filter element (7) adapted for at least one of: filtering, conducting and influencing a medium,
- a thermoplastic material (47) adapted for at least one of: coupling, connecting, sealing, fixing, adjusting, aligning, receiving, protecting, positioning said filter element (7),
wherein said thermoplastic material (47) is attached to said filter element (7), and wherein said thermoplastic material (47) was plastified at least partly for modifying said thermoplastic material (47), in particular by executing a method according to any one of the above claims.

13. The filter of claim 12, wherein said filter comprises at least one of:
- the thermoplastic material (47) was plastified at least partly for attaching said thermoplastic material (47) to said filter element (7).
- a frit element adapted for filtering a fluid,
- metal,
- glass,
- ceramic,
- a plaiting,
- a porous or cellular structure,
- said thermoplastic material (47) comprises a conductive rim,
- an optical window,
- a lens,
- a plurality of lenses,
- a plurality of windows,
- a plurality of different filter elements combined with each other.

14. The filter of claim 12 or any one of the above claims, wherein said filter comprises at least one of:
- the filter element (7) comprises a disk-shaped portion,
- the thermoplastic material (47) comprises a washer-shaped portion.

15. The filter of claim 12 or any one of the above claims, wherein said filter comprises at least one of:
- a tube,
- said tube surrounds said thermoplastic material (47),
- said thermoplastic material (47) surrounds said filter element (7),
- said filter element (7) comprises a chromatographic column (37).

16. The filter of claim 12 or any one of the above claims, wherein said thermoplastic material (47) is at least one of: polyetheretherketone (PEEK), one of a broad range of flouropolymeres, in particular perfluoroamines (PFA) or flourinated ethylen-propylene copolymer (FEP), liquid crystal polymers (LCP).

17. The filter of claim 12 or any one of the above claims, comprising at least one of:
- said medium is at least on of a group comprising light, a fluid, a gas, and a liquid,
- said filter element (7) is adapted for confining a stationary phase of a liquid chromatography column (11),
- said filter element (7) is adapted for influencing the pressure of said medium,
- said filter element (7) comprises a liquid chromatography column (37),
- said filter element (7) is adapted for providing a pressure-limiting valve,
- said filter element (7) comprises said thermoplastic material (47), wherein said thermoplastic material (47) is at least partly porous.

18. A fluidic system adapted for handling a fluid, comprising:
- a filter, in particular a filter of any one of the above claims,
- said filter comprises a filter element (7) adapted for at least one of: filtering, conducting and influencing a flowing medium,
- a thermoplastic material (47) adapted for at least one of: coupling, connecting, sealing, fixing, adjusting, aligning, receiving, protecting, positioning said filter element (7),
wherein said thermoplastic material (47) is attached to said filter element (7), and
wherein said thermoplastic material (47) was plastified at least partly for attaching said thermoplastic material (47) to said filter element (7).

19. The fluidic system of the above claim adapted for analyzing a fluid, comprising a fluid separation device for housing a fluid sample and for separating components of said fluid for analysis, the fluid separation device comprising:
- a chromatographic column (11;37) adapted for separating components of said fluid delivered by said fluid delivery system,
- said chromatographic column (11;37) coupled to said filter element (7),
- said chromatographic column (11;37) coupled to two of said filter elements (7),
- said chromatographic column (11;37) coupled to two of said filter elements (7), wherein said two filter elements are adapted for confining a stationary phase 39 of the chromatographic column (11;37),
- said chromatographic column (11;37) coupled to two of said filter elements (7), wherein said two filter elements are adapted for confining beads 41 of the chromatographic column (11;37),
- said chromatographic column (11;37) coupled to two of said filter elements (7), wherein said chromatographic column provides a filter element connected in series with said two or more filter elements (7),
- said filter element (7) providing the stationary phase of said chromatographic column, wherein said stationary phase is coupled to said thermoplastic material (47).

20. The fluidic system of claim 18 or any one of the above claims, further comprising
- a detection device adapted for detecting said separated components within said fluid.

21. The fluidic system of the above claim, wherein said fluidic system is or comprises at least one of:
- a chromatographic system (LC),
- a high performance liquid chromatographic (HPLC) system,
- an HPLC arrangement comprising a chip and an mass spectrograph (MS),
- a high throughput LC/MS system,
- a purification system,
- a micro fraction collection/spotting system,
- a system adapted for identifying proteins,
- a system comprising a GPC/SEC column,
- a nanoflow LC system,
- a multidimensional LC system adapted for separation of protein digests.
